# EUROPEAN PATENT APPLICATION

(11) **EP 4 535 466 A1**
(43) Date of publication of application: **09.04.2025**
(21) Application number: 24202887.6
(22) Date of filing: 26.09.2024
(51) Int. Cl.: H01M 4/525, H01M 10/0525, H01M 10/0567, H01M 10/0568, H01M 10/0569

(54) **ELECTROCHEMICAL APPARATUS AND ELECTRONIC APPARATUS**

(30) Priority: 28.09.2023 CN 202311282066
(71) Applicant: Dongguan Amperex Technology Limited, Dongguan City, Guangdong Province 523000 (CN)
(72) Inventor: CUI, Hui, Dongguan City, Guangdong 523000 (CN); CAI, Xin, Dongguan City, Guangdong 523000 (CN); LIU, Jianyu, Dongguan City, Guangdong 523000 (CN); TANG, Chao, Dongguan City, Guangdong 523000 (CN)
(74) Representative: Icosa

(57) **Abstract**

An electrochemical apparatus includes an electrolyte solution comprising a compound of Formula I 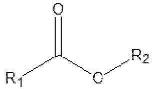 and a compound of Formula II 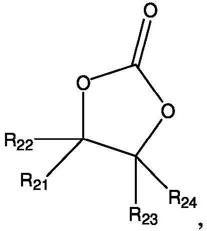 wherein R₁ is C₁ to C₁₀ alkyl, and R₂ is halogenated C₁ to C₁₀ alkyl; and R₂₁, R₂₂, R₂₃ and R₂₄ are each independently fluorine, or unsubstituted or halogenated C₁ to C₃ alkyl, and at least one of R₂₁, R₂₂, R₂₃ and R₂₄ includes fluorine.

## Description

### TECHNICAL FIELD

This application relates to the field of energy storage, and in particular, to an electrolyte solution, an electrochemical apparatus using the electrolyte solution and an electronic apparatus.

### BACKGROUND

Electrochemical apparatuses (e.g., lithium-ion batteries) are widely used in the fields such as portable electronic products, electric means of transport, aerospace, and energy reserves by virtue of advantages such as a high energy density, good cycle performance, safety, environmental friendliness, and no memory effect. With increasingly wider application of the lithium-ion batteries, higher requirements are imposed on the energy density of the lithium-ion batteries. The energy density can be improved by increasing the operating voltage of the lithium-ion batteries. However, with the rise of positive electrode potentials, an electrolyte solution becomes more instable at a positive electrode interface, and the intermittent cycle performance of the batteries gets poorer, which restricts the application of the lithium-ion batteries.

In view of this, it is indeed necessary to provide an electrolyte solution which can improve the intermittent cycle performance of the electrochemical apparatus under a high temperature.

### SUMMARY

This application aims to solve, at least to some extent, at least one of the problems in the related art by providing an electrochemical apparatus and an electronic apparatus.

According to an aspect of this application, this application provides an electrochemical apparatus. The electrochemical apparatus comprises a positive electrode, a negative electrode, a separator and an electrolyte solution. The electrolyte solution comprises a compound of Formula I and a compound of Formula II: 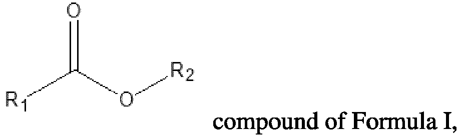 wherein R₁ is C₁ to C₁₀ alkyl, and R₂ is halogenated C₁ to C₁₀ alkyl; 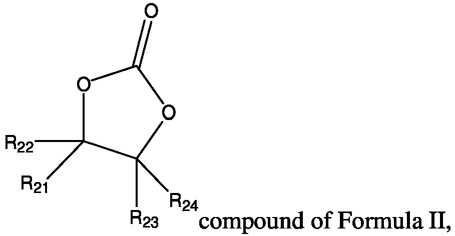 wherein R₂₁, R₂₂, R₂₃ and R₂₄ are each independently fluorine, unsubstituted or halogenated C₁ to C₃ alkyl, and at least one of R₂₁, R₂₂, R₂₃ and R₂₄ includes fluorine.

According to embodiments of this application, R₁ is C₁ to C₅ alkyl, and R₂ is halogenated C₁ to C₆ alkyl and comprises at least one fluorine. By selecting R₁ and R₂ within the above ranges, the intermittent cycle performance of the electrochemical apparatus under a high temperature can be further improved.

According to embodiments of this application, R₁ is C₁ to C₃ alkyl, and R₂ is halogenated C₁ to C₄ alkyl and comprises at least one fluorine. By selecting R₁ and R₂ within the above ranges, the intermittent cycle performance of the electrochemical apparatus under a high temperature can be still further improved.

According to embodiments of this application, the compound of Formula I is at least one selected from the following compounds:

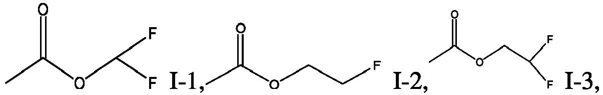

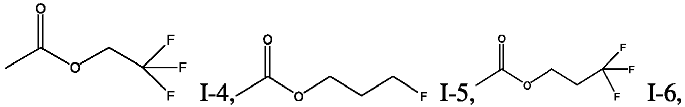

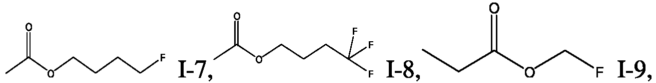

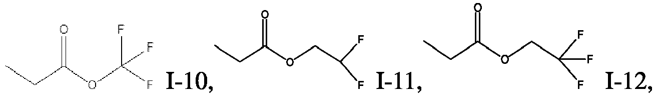

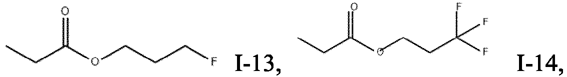

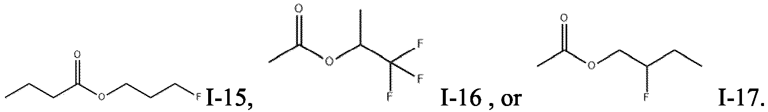

By selecting at least one of the above compound of Formula I, the intermittent cycle performance of the electrochemical apparatus under a high temperature can be further improved.

According to embodiments of this application, based on a mass of the electrolyte solution, a mass percentage of the compound of Formula I is 10% to 80%. By adjusting the mass percentage of the compound of Formula I to be within the above range, the intermittent cycle performance of the electrochemical apparatus under a high temperature can be further improved.

According to embodiments of this application, based on the mass of the electrolyte solution, a mass percentage of the compound of Formula I is 30% to 73%. By adjusting the mass percentage of the compound of Formula I to be within the above range, the intermittent cycle performance of the electrochemical apparatus under a high temperature can be further improved.

According to embodiments of this application, based on the mass of the electrolyte solution, the mass percentage of the compound of Formula I is 45% to 73%. By adjusting the mass percentage of the compound of Formula I to be within the above range, it is conducive to improving the film-forming uniformity of an electrode protection film and the dynamics performance of the electrolyte solution, and further improving the intermittent cycle performance of the electrochemical apparatus under a high temperature.

According to embodiments of this application, the compound of Formula II is at least one selected from the following compounds: 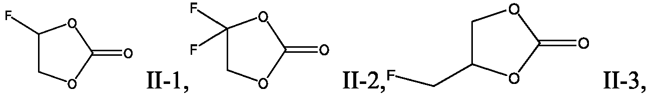 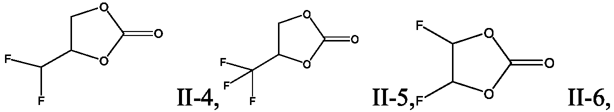 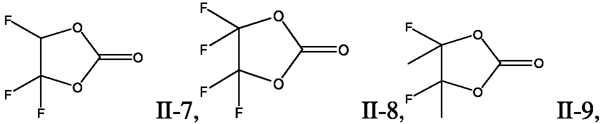 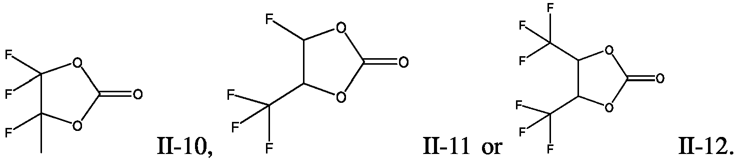 By selecting at least one of the above compound of Formula II, the intermittent cycle performance of the electrochemical apparatus under a high temperature can be further improved.

According to embodiments of this application, based on the mass of the electrolyte solution, the mass percentage of the compound of Formula II is 5% to 25%. By adjusting the mass percentage of the compound of Formula II to be within the above range, the intermittent cycle performance of the electrochemical apparatus under a high temperature can be further improved.

According to embodiments of this application, based on the mass of the electrolyte solution, the mass percentage of the compound of Formula II is 8% to 15%. By adjusting the mass percentage of the compound of Formula II to be within the above range, the intermittent cycle performance of the electrochemical apparatus under a high temperature can be further improved.

According to embodiments of this application, based on the mass of the electrolyte solution, a ratio of the mass percentage of the compound of Formula I to the mass percentage of the compound of Formula II ranges from 1.25 to 16. By controlling the ratio of the mass percentage of the compound of Formula I to the mass percentage of the compound of Formula II to be within the above range, the synergistic effect of the compound of Formula I and the compound of Formula II can be fully exerted to form an electrode protection film with a suitable and uniform thickness, thereby further improving the intermittent cycle performance of the electrochemical apparatus under a high temperature.

According to embodiments of this application, based on the mass of the electrolyte solution, the ratio of the mass percentage of the compound of Formula I to the mass percentage of the compound of Formula II ranges from 5.5 to 13. By controlling the ratio of the mass percentage of the compound of Formula I to the mass percentage of the compound of Formula II to be within the above range, the synergistic effect of the compound of Formula I and the compound of Formula II can be fully exerted, thereby further improving the intermittent cycle performance of the electrochemical apparatus under a high temperature.

According to embodiments of this application, based on the mass of the electrolyte solution, a sum of the mass percentage of the compound of Formula I and the mass percentage of the compound of Formula II ranges from 18% to 87.5%. By controlling the sum of the mass percentage of the compound of Formula I and the mass percentage of the compound of Formula II to be within the above range, the synergistic effect of the compound of Formula I and the compound of Formula II can be fully exerted, thereby further improving the intermittent cycle performance of the electrochemical apparatus under a high temperature.

According to embodiments of this application, based on the mass of the electrolyte solution, the sum of the mass percentage of the compound of Formula I and the mass percentage of the compound of Formula II ranges from 48% to 81%, which is conducive to improving the film-forming strength of an electrode protection film. By controlling the sum of the mass percentage of the compound of Formula I and the mass percentage of the compound of Formula II to be within the above range, the intermittent cycle performance of the electrochemical apparatus under a high temperature can be further improved.

According to embodiments of this application, the electrolyte solution further includes a first lithium salt, wherein the first lithium salt includes at least one selected from the group consisting of lithium hexafluorophosphate LiPF₆ and lithium bis(fluorosulfonyl)imide LiFSI. By selecting the above compound as the first lithium salt, the intermittent cycle performance of the electrochemical apparatus under a high temperature can be further improved.

According to embodiments of this application, based on the mass of the electrolyte solution, a ratio of the mass percentage of the compound of Formula I to a mass percentage of the first lithium salt ranges from 0.8 to 8. By adjusting the ratio of the mass percentage of the compound of Formula I and the mass percentage of the first lithium salt to be within the above range, the intermittent cycle performance of the electrochemical apparatus under a high temperature can be further improved.

According to embodiments of this application, based on the mass of the electrolyte solution, the ratio of the mass percentage of the compound of Formula I to the mass percentage of the first lithium salt ranges from 4 to 6.3. By adjusting the ratio of the mass percentage of the compound of Formula I and the mass percentage of the first lithium salt to be within the above range, the intermittent cycle performance of the electrochemical apparatus under a high temperature can be further improved.

According to embodiments of this application, the electrolyte solution further includes a second lithium salt, wherein the second lithium salt includes at least one selected from the group consisting of lithium bistrifluoromethanesulfonimide LiTFSI, lithium tetrafluoroborate LiBF₄, lithium difluoro(oxalato)borate LiDFOB, lithium bis(oxalato)borate LiBOB, and lithium difluorophosphate LiPO₂F₂; and based on the mass of the electrolyte solution, a mass percentage of the second lithium salt is 0.2% to 10%. By selecting the above lithium salt as the second lithium salt, and controlling the mass percentage of the second lithium salt to be within the above range, the intermittent cycle performance of the electrochemical apparatus under a high temperature can be further improved.

According to embodiments of this application, the mass percentage of the second lithium salt is 0.2% to 1%. By selecting the above lithium salt as the second lithium salt, and controlling the mass percentage of the second lithium salt to be within the above range, the intermittent cycle performance of the electrochemical apparatus under a high temperature can be still further improved.

According to embodiments of this application, the electrolyte solution further includes lithium difluorophosphate, and based on the mass of the electrolyte solution, a mass percentage of the lithium difluorophosphate is 0.01% to 0.96%. By controlling the mass percentage of the lithium difluorophosphate to be within the above range, the intermittent cycle performance of the electrochemical apparatus under a high temperature can be further improved.

According to embodiments of this application, the electrolyte solution further includes lithium difluorophosphate, and based on the mass of the electrolyte solution, the mass percentage of the lithium difluorophosphate is 0.02% to 0.48%. By controlling the mass percentage of the lithium difluorophosphate to be within the above range, the intermittent cycle performance of the electrochemical apparatus under a high temperature can be still further improved.

According to embodiments of this application, the electrolyte solution further includes lithium difluorophosphate, and based on the mass of the electrolyte solution, a ratio of the mass percentage of the compound of Formula II to the mass percentage of the lithium difluorophosphate ranges from 5 to 75. By adjusting the ratio of the mass percentage of the Compound of Formula II to the mass percentage of the lithium difluorophosphate to be within the above range, the toughness of an electrode protection film can be improved, and the intermittent cycle performance of the electrochemical apparatus under a high temperature can be further improved.

According to embodiments of this application, based on the mass of the electrolyte solution, a ratio of the mass percentage of the compound of Formula II to the mass percentage of lithium difluorophosphate ranges from 10 to 30. By adjusting the ratio of the mass percentage of the compound of Formula II to the mass percentage of the lithium difluorophosphate to be within the above range, the intermittent cycle performance of the electrochemical apparatus under a high temperature can be further improved.

According to embodiments of this application, the electrolyte solution includes ethylene carbonate, propylene carbonate and lithium hexafluorophosphate. By selecting the electrolyte solution including the above substances, the intermittent cycle performance of the electrochemical apparatus under a high temperature can be improved.

According to embodiments of this application, the electrolyte solution includes ethylene carbonate, propylene carbonate, diethyl carbonate and lithium hexafluorophosphate. By selecting the electrolyte solution including the above substances, the intermittent cycle performance of the electrochemical apparatus under a high temperature can be improved.

According to embodiments of this application, the electrolyte solution includes ethylene carbonate, propylene carbonate, diethyl carbonate, lithium hexafluorophosphate LiPF₆ and lithium difluorophosphate LiPO₂F₂. By selecting the electrolyte solution including the above substances, the intermittent cycle performance of the electrochemical apparatus under a high temperature can be improved.

According to embodiments of this application, the electrolyte solution includes ethylene carbonate, propylene carbonate, lithium hexafluorophosphate LiPF₆, and any two selected from the group consisting of lithium bistrifluoromethanesulfonimide LiTFSI, lithium tetrafluoroborate LiBF₄, lithium difluoro(oxalato)borate LiDFOB, lithium bis(oxalato)borate LiBOB, and lithium difluorophosphate LiPO₂F₂. By selecting the electrolyte solution including the above substances, the intermittent cycle performance of the electrochemical apparatus under a high temperature can be improved. According to another aspect of this application, this application provides an electrochemical apparatus, including a positive electrode, a negative electrode, a separator and the electrolyte solution described herein.

According to embodiments of this application, the positive electrode includes a positive active material, wherein the positive active material includes at least one of lithium cobalt oxide, lithium nickel cobalt manganate or lithium nickel manganese oxide. By selecting the above substances as the positive active material, the intermittent cycle performance of the electrochemical apparatus under a high temperature can be further improved.

According to embodiments of this application, the positive active material includes lithium cobalt oxide, and a particle size of the positive active material satisfies the following condition: Dv₅₀ is 10 µm to 25 µm, and Dv₁₀ is 2 µm to 10 µm. By adjusting the particle size of the positive active material to be within the above range, a stacking form of the positive active material that is conducive to full infiltration of the electrolyte solution can be formed, thereby opening an electrolyte solution transmission path, and forming a uniform and tough electrode protection film, which further improves the intermittent cycle performance of the electrochemical apparatus under a high temperature.

According to embodiments of this application, the positive active material includes lithium cobalt oxide, and the particle size of the positive active material satisfies the following condition: Dv₅₀ is 14.1µm to 16.5 µm, and Dv₁₀ is 3.8 µm to 5.8 µm. By adjusting the particle size of the positive active material to be within the above range, the intermittent cycle performance of the electrochemical apparatus under a high temperature can be further improved. According to another aspect of this application, this application provides an electronic apparatus, including the electrochemical apparatus described herein.

By using the electrolyte solution including the compound of Formula I and the compound of Formula II, the intermittent cycle performance of the electrochemical apparatus under a high temperature can be improved.

The additional aspects and advantages of this application may be partially described and shown in the subsequent description or illustrated by the implementation of the embodiments of this application.

### DETAILED DESCRIPTION OF EMBODIMENTS

Embodiments of this application will be described in detail below. No embodiment of this application is to be construed as a limitation on this application.

In specific implementations and claims, a list of items linked by the terms such as "at least one of" may mean any combination of the listed items. For example, if items A and B are listed, the phrase "at least one of A and B" means: A alone; B alone; or both A and B. In another example, if items A, B, and C are listed, the phrase "at least one of A, B, and C" means: A alone; B alone; C alone; A and B (excluding C); A and C (excluding B); B and C (excluding A); or all of A, B, and C. The item A may include a single element or a plurality of elements. The item B may include a single element or a plurality of elements. The item C may include a single element or a plurality of elements.

As used herein, the term "alkyl" is expected to be a linear saturated hydrocarbon structure having 1 to 20 carbon atoms. "Alkyl" is also expected to be a branched or cyclic hydrocarbon structure having 3-20 carbon atoms. When an alkyl having a specific carbon number is designated, all geometric isomers having that carbon number are expected to be covered. Therefore, e.g., "butyl" is meant to include n-butyl, sec-butyl, isobutyl, tert-butyl, and cyclobutyl; "propyl" includes n-propyl, isopropyl, and cyclopropyl. Examples of alkyl include, but are not limited to, methyl, ethyl, n-propyl, isopropyl, cyclopropyl, n-butyl, isobutyl, sec-butyl, tert-butyl, cyclobutyl, n-pentyl, isopentyl, neopentyl, cyclopentyl, methylcyclopentyl, ethylcyclopentyl, n-hexyl, isohexyl, cyclohexyl, n-heptyl, octyl, norbornyl, and the like.

As used herein, the term "halogen" may be F, Cl, Br, or I.

Electrochemical apparatuses (e.g., lithium-ion batteries) are widely used in various fields by virtue of their superior performance. In the meanwhile, higher requirements are imposed on their performance such as the energy density and cycle performance. The energy density can be improved by increasing the operating voltage of the lithium-ion batteries. However, with the rise of positive electrode potentials, the electrolyte solution becomes more instable at a positive electrode interface, leading to poorer intermittent cycle performance of the electrochemical apparatuses. This problem is especially noticeable in the context of a high temperature.

To solve the above problem, this application provides an electrochemical apparatus. The electrochemical apparatus comprises a positive electrode, a negative electrode, a separator and an electrolyte solution. The electrolyte solution comprises a compound of Formula I and a compound of Formula II: 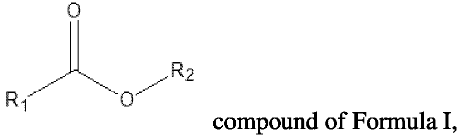 wherein R₁ is C₁ to C₁₀ alkyl, and R₂ is halogenated C₁ to C₁₀ alkyl; 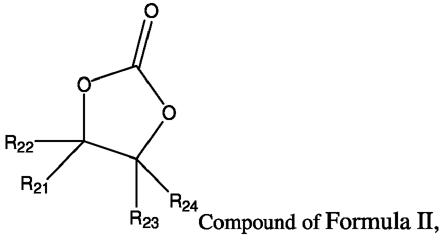 wherein R₂₁, R₂₂, R₂₃ and R₂₄ are each independently fluorine, or unsubstituted or halogenated C₁ to C₃ alkyl, and at least one of R₂₁, R₂₂, R₂₃ and R₂₄ includes fluorine.

Both the compound of Formula I and the compound of Formula II have high oxidation resistance, and the molecular structures of the compound of Formula I and the compound of Formula II enable the two to fully exert their synergistic effect, so that a highly stable electrode protection film is formed, and the interface reaction activity and the consumption of active substances are lowered, thereby significantly improving the intermittent cycle performance of the electrochemical apparatus under a high temperature.

In some embodiments, R₁ is C₁ to C₅ alkyl, and R₂ is halogenated C₁ to C₆ alkyl and includes at least one fluorine. By selecting R₁ and R₂ within the above ranges, the intermittent cycle performance of the electrochemical apparatus under a high temperature can be further improved.

In some embodiments, R₁ is C₁ to C₃ alkyl, and R₂ is halogenated C₁ to C₄ alkyl and includes at least one fluorine. By selecting R₁ and R₂ within the above ranges, the intermittent cycle performance of the electrochemical apparatus under a high temperature can be further improved.

In some embodiments, the compound of Formula I is at least one selected from the following compounds: 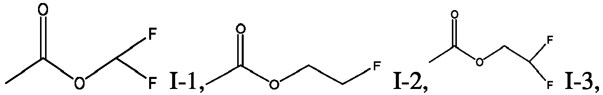 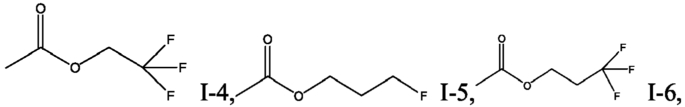 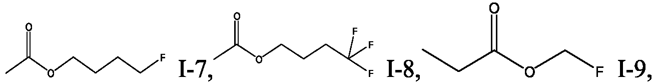 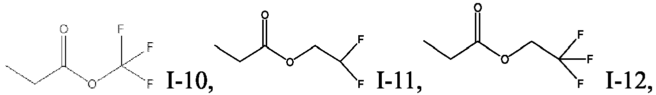 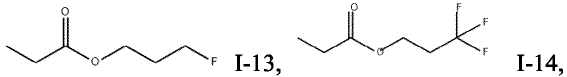 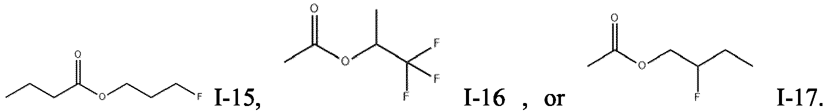 By selecting the above compound of Formula I, the intermittent cycle performance of the electrochemical apparatus under a high temperature can be further improved.

In some embodiments, based on a mass of the electrolyte solution, a mass percentage of the compound of Formula I is 10% to 80%. In some embodiments, based on the mass of the electrolyte solution, a mass percentage of the compound of Formula I is 30% to 75%. In some embodiments, based on the mass of the electrolyte solution, the mass percentage of the compound of Formula I is 45% to 73%. In some embodiments, based on the mass of the electrolyte solution, the mass percentage of the compound of Formula I is 10%, 15%, 20%, 25%, 30%, 35%, 40%, 45%, 50%, 55%, 60%, 65%, 70%, 73%, 75%, 80% or a value within a range formed by any two of the above values. By adjusting the mass percentage of the compound of Formula I to be within the above range, the intermittent cycle performance of the electrochemical apparatus under a high temperature can be further improved.

In some embodiments, the compound of Formula II is at least one selected from the following compounds: 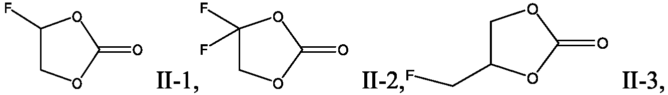 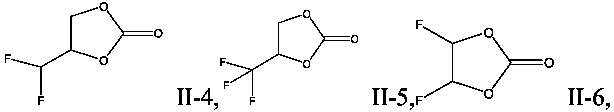 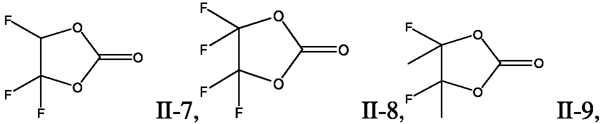 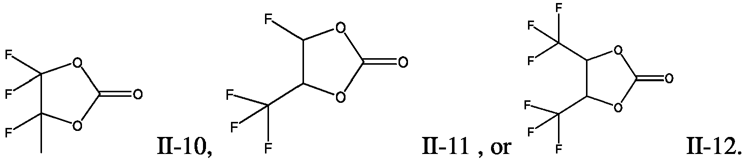 By selecting the above compound of Formula II, the intermittent cycle performance of the electrochemical apparatus under a high temperature can be further improved.

In some embodiments, based on the mass of the electrolyte solution, a mass percentage of the compound of Formula II is 5% to 25%. In some embodiments, based on the mass of the electrolyte solution, the mass percentage of the compound of Formula II is 10% to 30%. In some embodiments, based on the mass of the electrolyte solution, the mass percentage of the compound of Formula II is 15% to 20%. In some embodiments, based on the mass of the electrolyte solution, the mass percentage of the compound of Formula II is 8% to 15%. In some embodiments, based on the mass of the electrolyte solution, the mass percentage of the compound of Formula II is 5%, 8%, 10%, 15%, 20%, 25%, 30%, 35% or a value within a range formed by any two of the above values. By adjusting the mass percentage of the compound of Formula II to be within the above range, the intermittent cycle performance of the electrochemical apparatus under a high temperature can be further improved.

In some embodiments, based on the mass of the electrolyte solution, a ratio of the mass percentage of the compound of Formula I to the mass percentage of the compound of Formula II ranges from 1.25 to 16. In some embodiments, based on the mass of the electrolyte solution, the ratio of the mass percentage of the compound of Formula I to the mass percentage of the compound of Formula II ranges from 3 to 15. In some embodiments, based on the mass of the electrolyte solution, the ratio of the mass percentage of the compound of Formula I to the mass percentage of the compound of Formula II ranges from 5.5 to 13. In some embodiments, based on the mass of the electrolyte solution, the ratio of the mass percentage of the compound of Formula I to the mass percentage of the compound of Formula II is 1.25, 1.5, 2, 3, 4, 5, 5.5, 6, 7, 8, 9, 10, 11, 12, 13, 14, 15, 16 or a value within a range formed by any two of the above values. By adjusting the ratio of the mass percentage of the compound of Formula I to the mass percentage of the compound of Formula II to be within the above range, the intermittent cycle performance of the electrochemical apparatus under a high temperature can be further improved.

In some embodiments, a sum of the mass percentage of the compound of Formula I and the mass percentage of the compound of Formula II ranges from 18% to 87.5%. In some embodiments, the sum of the mass percentage of the compound of Formula I and the mass percentage of the compound of Formula II ranges from 48% to 81%. In some embodiments, the sum of the mass percentage of the compound of Formula I and the mass percentage of the compound of Formula II is 18%, 20%, 25%, 35%, 40%, 45%, 48%, 50%, 55%, 60%, 65%, 70%, 75%, 80%, 81%, 85%, 87.5% or a value within a range formed by any two of the above values.

In some embodiments, the electrolyte solution further includes a first lithium salt, wherein the first lithium salt includes at least one selected from the group consisting of lithium hexafluorophosphate LiPF₆ and lithium bis(fluorosulfonyl)imide LiFSI. By selecting the above compound lithium salt as the first lithium salt, the intermittent cycle performance of the electrochemical apparatus under a high temperature can be further improved.

In some embodiments, based on the mass of the electrolyte solution, a ratio of the mass percentage of the compound of Formula I to the mass percentage of the first lithium salt ranges from 0.8 to 8. In some embodiments, based on the mass of the electrolyte solution, the ratio of the mass percentage of the compound of Formula I to the mass percentage of the first lithium salt ranges from 5 to 8. In some embodiments, based on the mass of the electrolyte solution, the ratio of the mass percentage of the compound of Formula I to the mass percentage of the first lithium salt ranges from 2.54 to 6.3. In some embodiments, based on the mass of the electrolyte solution, the ratio of the mass percentage of the compound of Formula I to the mass percentage of the first lithium salt is 0.8, 1, 1.5, 2, 2.5, 3, 3.5, 4, 4.5, 5, 5.5, 6, 6.3, 6.5, 7, 7.5, 8 or a value within a range formed by any two of the above values. By adjusting the ratio of the mass percentage of the compound of Formula I and the mass percentage of the first lithium salt to be within the above range, the intermittent cycle performance of the electrochemical apparatus under a high temperature can be further improved.

In some embodiments, the electrolyte solution further includes a second lithium salt, wherein the second lithium salt includes at least one selected from the group consisting of lithium bistrifluoromethanesulfonimide LiTFSI, lithium tetrafluoroborate LiBF₄, lithium difluoro(oxalato)borate LiDFOB, lithium bis(oxalato)borate LiBOB, and lithium difluorophosphate LiPO₂F₂; and based on the mass of the electrolyte solution, a mass percentage of the second lithium salt is 0.2% to 10%. In some embodiments, based on the mass of the electrolyte solution, the mass percentage of the second lithium salt is 1% to 8%. In some embodiments, based on the mass of the electrolyte solution, the mass percentage of the second lithium salt is 3% to 5%. In some embodiments, based on the mass of the electrolyte solution, the mass percentage of the second lithium salt is 0.2%, 0.5%, 1%, 2%, 3%, 4%, 5%, 6%, 7%, 8%, 9%, 10% or a value within a range formed by any two of the above values. By selecting the above lithium salt as the second lithium salt, and controlling the mass percentage of the second lithium salt to be within the above range, the intermittent cycle performance of the electrochemical apparatus under a high temperature can be further improved.

In some embodiments, the electrolyte solution further includes lithium difluorophosphate, and based on the mass of the electrolyte solution, a mass percentage of the lithium difluorophosphate is 0.01% to 0.96%. In some embodiments, the electrolyte solution further includes lithium difluorophosphate, and based on the mass of the electrolyte solution, the mass percentage of the lithium difluorophosphate is 0.02% to 0.48%. In some embodiments, based on the mass of the electrolyte solution, the mass percentage of the lithium difluorophosphate is 0.01, 0.02, 0.03, 0.05, 0.07, 0.1, 0.2, 0.3, 0.48, 0.5, 0.6, 0.7, 0.8, 0.96, 1 or a value within a range formed by any two of the above values. By using the electrolyte solution including the lithium difluorophosphate of the above mass percentage, the intermittent cycle performance of the electrochemical apparatus under a high temperature can be further improved.

In some embodiments, the electrolyte solution further includes lithium difluorophosphate, and based on the mass of the electrolyte solution, a ratio of the mass percentage of the compound of Formula II to the mass percentage of the lithium difluorophosphate ranges from 5 to 75. In some embodiments, based on the mass of the electrolyte solution, the ratio of the mass percentage of the compound of Formula II to the mass percentage of the lithium difluorophosphate ranges from 10 to 30. In some embodiments, based on the mass of the electrolyte solution, the ratio of the mass percentage of the compound of Formula II to a the mass percentage of the lithium difluorophosphate is 5, 10, 15, 20, 25, 30, 35, 40, 45, 50, 55, 60, 65, 70, 75 or a value within a range formed by any two of the above values. By adjusting the ratio of the mass percentage of the compound of Formula II to the mass percentage of the lithium difluorophosphate to be within the above range, the intermittent cycle performance of the electrochemical apparatus under a high temperature can be further improved.

In some embodiments, the electrolyte solution may further include other compounds, and the other compounds may be selected from non-fluorocarbonate, non-fluorocarboxylate, or a combination thereof. In some embodiments, non-fluorocarbonate may include at least one of ethylene carbonate (EC), propylene carbonate (PC), diethyl carbonate (DEC), ethyl methyl carbonate (EMC) and dimethyl carbonate (DMC). In some embodiments, non-fluorocarboxylate may include at least one of ethyl formate, propyl formate, butyl formate, isobutyl formate, methyl acetate, ethyl acetate, propyl acetate, methyl propionate, ethyl propionate (EP), or propyl propionate (PP).

In some embodiments, the electrolyte solution includes ethylene carbonate, propylene carbonate and lithium hexafluorophosphate. By selecting the electrolyte solution including the above substances, the intermittent cycle performance of the electrochemical apparatus under a high temperature can be further improved.

In some embodiments, the electrolyte solution includes ethylene carbonate, propylene carbonate, diethyl carbonate and lithium hexafluorophosphate. By selecting the electrolyte solution including the above substances, the intermittent cycle performance of the electrochemical apparatus under a high temperature can be further improved.

In some embodiments, the electrolyte solution includes ethylene carbonate, propylene carbonate, diethyl carbonate, lithium hexafluorophosphate LiPF₆ and lithium difluorophosphate LiPO₂F₂. By selecting the electrolyte solution including the above substances, the intermittent cycle performance of the electrochemical apparatus under a high temperature can be further improved.

In some embodiments, the electrolyte solution includes ethylene carbonate, propylene carbonate, lithium hexafluorophosphate LiPF₆, and any two selected from the group consisting of lithium bistrifluoromethanesulfonimide LiTFSI, lithium tetrafluoroborate LiBF₄, lithium difluoro(oxalato)borate LiDFOB, lithium bis(oxalato)borate LiBOB, or lithium difluorophosphate LiPO₂F₂. By selecting the electrolyte solution including the above substances, the intermittent cycle performance of the electrochemical apparatus under a high temperature can be further improved. This application further provides an electrochemical apparatus, including a positive electrode, a negative electrode, a separator and the electrolyte solution described herein.

In some embodiments, the positive electrode includes a positive current collector and a positive active material layer located on one side or two sides of the positive current collector, and the positive active material layer includes a positive active material.

In some embodiments, the positive active material includes at least one of lithium cobalt oxide, lithium nickel cobalt manganate NMC or lithium nickel manganese oxide. By selecting the above substances as the positive active material, the intermittent cycle performance of the electrochemical apparatus under a high temperature can be improved.

In some embodiments, the positive active material includes lithium cobalt oxide, and a particle size of the positive active material satisfies the following condition: Dv₅₀ is 10 µm to 25 µm and Dv₁₀ is 2 µm to 10 µm. In some embodiments, the positive active material includes lithium cobalt oxide, and a particle size of the positive active material satisfies the following condition: Dv₅₀ is 14.1 µm to 16.5 µm, and Dv₁₀ is 3.8 µm to 5.8 µm. By adjusting the particle size of the positive active material to be within the above range, the intermittent cycle performance of the electrochemical apparatus under a high temperature can be further improved.

In some embodiments, Dv₅₀ is 10 µm, 11 µm, 12 µm, 13 µm, 14 µm, 14.1 µm, 15 µm, 16 µm, 16.5 µm, 17 µm, 18 µm, 19 µm, 20 µm, 21 µm, 22 µm, 23 µm, 24 µm, 25 µm, or a value within a range formed by any two of the above values. By adjusting the particle size of the positive active material to be within the above range, the intermittent cycle performance of the electrochemical apparatus under a high temperature can be further improved.

In some embodiments, Dv₁₀ is 2 µm, 3 µm, 3.2 µm, 3.8 µm, 4 µm, 5 µm, 5.8 µm, 6 µm, 7 µm, 8 µm, 9 µm, or a value within a range formed by any two of the above values. By adjusting the particle size of the positive active material to be within the above range, the intermittent cycle performance of the electrochemical apparatus under a high temperature can be further improved.

In some embodiments, the positive current collector may adopt aluminum (Al) foil. Other positive current collectors commonly used in the art may also be used. In some embodiments, a thickness of the positive current collector may be 1 µm to 200 µm.

In some embodiments, the positive active material layer may further include a binder and a conductive agent. In some embodiments, the binder in the positive active material layer may include at least one of polyvinylidene fluoride, a vinylidene fluoride-hexafluoropropylene copolymer, a styrene-acrylate copolymer, a styrene-butadiene copolymer, polyamide, polyacrylonitrile, polyacrylate ester, polyacrylic acid, polyacrylate salt, sodium carboxymethyl cellulose, polyvinyl acetate, polyvinylpyrrolidone, polyvinyl ether, polytetrafluoroethylene, or polyhexafluoropropylene. In some embodiments, the conductive agent in the positive active material layer may include at least one of conductive carbon black, Ketjen black, graphene, carbon nanotubes, or carbon fibers. In some embodiments, mass ratio of the positive active material to the conductive agent to the binder in the positive active material layer may be (91 to 99): (0.5 to 3): (0.5 to 6). It should be understood that the foregoing is merely exemplary and the positive active material layer may be of any other suitable material, thickness and mass ratio.

In some embodiments, the negative electrode plate may include a negative current collector and a negative active material layer disposed on the negative current collector. In some embodiments, the negative current collector may adopt at least one of copper foil, nickel foil or a carbon-based current collector. In some embodiments, the negative active material layer may include a negative active material, a conductive agent and a binder. In some embodiments, the negative active material may include at least one of graphite or a silicon-based material. In some embodiments, the silicon-based material includes at least one of silicon, a silica material, a silicon-carbon material or a silica-carbon material. In some embodiments, the conductive agent in the negative active material layer may include at least one of conductive carbon black, Ketjen black, graphene, carbon nanotubes, or carbon fibers. In some embodiments, the binder in the negative active material layer may include at least one of sodium carboxymethyl cellulose (CMC), polyacrylate ester, polyacrylic acid, polyacrylate salt, polyvinyl pyrrolidone, polyimide, polyamideimide, polysiloxane, styrene-butadiene rubber or polyurethane resin. In some embodiments, mass ratio of the negative active material to the conductive agent to the binder in the negative active material layer may be (78 to 98.5): (0.1 to 10): (0.1 to 10). It should be understood that the foregoing is merely exemplary, and any other suitable material and mass ratio can also be adopted.

In some embodiments, the separator includes a substrate layer. The substrate layer is a non-woven fabric, a film or a composite film having a porous structure, and a material of the substrate layer is selected from at least one of polyethylene, polypropylene, polyvinylidene fluoride, polyethylene terephthalate, polyimide or aramid. For example, the polyethylene includes and is selected from at least one of high density polyethylene, low density polyethylene or ultra-high molecular weight polyethylene. Polyethylene and polypropylene, in particular, have a good effect on preventing short circuits and can improve safety of a battery through a turn-off effect. In some embodiments, a thickness of the substrate layer falls within a range of 4 µm to 20 µm.

In some embodiments, the separator may further include a heat resistance layer, and the heat resistance layer is disposed on at least one surface of the substrate layer. The heat resistance layer includes an inorganic particle and a binder. The inorganic particle includes at least one of aluminum oxide (Al₂O₃), silicon oxide (SiO₂), magnesium oxide (MgO), titanium oxide (TiO₂), hafnium dioxide (HfO₂), tin oxide (SnO₂), cerium dioxide (CeO₂), nickel oxide (NiO), zinc oxide (ZnO), calcium oxide (CaO), zirconium oxide (ZrO₂), yttrium oxide (Y₂O₃), silicon carbide (SiC), boehmite, aluminum hydroxide, magnesium hydroxide, calcium hydroxide or barium sulfate. The binder of the heat resistance layer is selected from at least one of polyvinylidene fluoride, a vinylidene fluoride-hexafluoropropylene copolymer, polyamide, polyacrylonitrile, polyacrylate ester, polyacrylic acid, polyacrylate salt, sodium carboxymethyl cellulose, polyvinylpyrrolidone, polyvinyl ether, polytetrafluoroethylene or polyhexafluoropropylene. The heat resistance layer on the surface of the substrate layer can improve heat resistance, oxidation resistance and electrolyte infiltration performance of the separator and enhance bonding performance between the separator and the electrode plates.

In some embodiments, the electrochemical apparatus may include an electrode assembly. In some embodiments, the electrode assembly is a coiled electrode assembly or a stacked electrode assembly.

In some embodiments, the electrochemical apparatus of this application includes, but is not limited to, all kinds of primary batteries, secondary batteries or capacitors. In some embodiments, the electrochemical apparatus is a lithium secondary battery. In some embodiments, the lithium secondary battery includes, but is not limited to: a lithium metal secondary battery, a lithium-ion secondary battery, a lithium polymer secondary battery, or a lithium-ion polymer secondary battery. In some embodiments, the electrochemical apparatus is a sodium-ion battery.

This application still further provides an electronic apparatus including the electrochemical apparatus described herein.

Electronic device or apparatus of this application is not specifically limited. In some embodiments, the electrochemical equipment of this application includes, but is not limited to, a notebook computer, a pen-input computer, a mobile computer, an electronic book player, a portable phone, a portable fax machine, a portable copier, a portable printer, a headphone, a video recorder, a liquid crystal television, a hand-held cleaner, a portable CD machine, a mini disc, a transceiver, an electronic organizer, a calculator, a memory card, a portable audio recorder, a radio, a backup power supply, a motor, an automobile, a motorcycle, a power bicycle, a bicycle, a lighting appliance, a toy, a game machine, a clock, an electric tool, a flash light, a camera, a large household storage battery, a lithium-ion capacitor, etc.

A lithium-ion battery is used as an example and the preparation of the lithium-ion battery is illustrated in combination with specific embodiments. A person skilled in the art should understand that a preparation method described in this application is only an example, and any other suitable preparation methods are within the scope of this application.

### Embodiment

Performance evaluation is performed based on an embodiment and a comparative embodiment of a lithium-ion battery according to this application in the following descriptions.

### I. Preparation of lithium-ion battery

### 1. Preparation of positive electrode

Mixing LiCoO₂ as a positive active material, conductive carbon black (Super P) as a conductive agent, and polyvinylidene difluoride (PVDF) as a binder at a weight ratio of 97: 1.4: 1.6, adding the same in N-methyl-pyrrolidone (NMP), and fully stirring and mixing to obtain a uniform positive electrode slurry, wherein a solid content of the positive electrode slurry is 72 wt%. Then, evening coating a positive current collector aluminum foil with the positive electrode slurry, and then drying, cold-pressing, and slitting to obtain a positive electrode.

The particle sizes Dv₅₀ and Dv₁₀ of the positive active material can be controlled by adjusting the proportion of LiCoO₂ particles with different particle sizes. The LiCoO₂ particles with different particle sizes can be obtained by any means known in the art, for example, by crushing, grading and shaping.

### 2. Preparation of negative electrode

Mixing artificial graphite as a negative active material, conductive carbon black (Super P) as a conductive agent, sodium carboxymethyl cellulose as a thickening agent, and styrene-butadiene rubber as a binder at a weight ratio of 96.4:1.5:0.5:1.6, adding deionized water, and stirring evenly to obtain a negative electrode slurry, wherein a solid content of the negative electrode slurry is 54 wt%. Coating a negative current collector copper foil with the negative electrode slurry, and then drying, cold-pressing and slitting to obtain the negative electrode.

### 3. Preparation of separator

Selecting a 9 µm thick polyethylene (PE) porous film as a separator substrate, coating a surface of one side of the separator substrate with a 2 µm thick heat-resistant layer (wherein in a heat-resistant layer slurry, based on a total mass of aluminum oxide and a binder PVDF, mass percent of the aluminum oxide is 95%, and mass percent of the PVDF is 5%), then coating two sides with a polyvinylidene difluoride (PVDF) slurry, and drying to obtain the separator.

### 4. Preparation of electrolyte solution

Under a dry argon environment, mixing liquid components according to the settings in embodiments or comparative embodiments to obtain a mixed solvent, then dissolving a fully dried lithium salt in the foregoing mixed solvent, and then uniformly mixing to obtain the electrolyte solution.

### 5. Preparation of lithium-ion battery

Stacking the positive electrode, the separator, and the negative electrode in sequence, putting the separator between the positive electrode and the negative electrode to achieve a separation function, and winding to obtain an electrode assembly. Putting the electrode assembly into an outer aluminum-plastic film package, removing water under 80°C, injecting the foregoing electrolyte solution, sealing the package, and performing steps such as standing, chemical formation, degassing, edge trimming, shaping, and capacity testing to obtain the lithium-ion battery.

### II. Test method

Test method for intermittent cycle performance of lithium-ion battery under a high temperature is as follows:
Putting the lithium-ion battery into a 45°C thermostat, charging the lithium-ion battery at a constant current of 0.5 C until the voltage reaches 4.5 V, then charging the lithium-ion battery at a constant voltage of 4.5 V until the current reaches 0.05 C, and recording a battery thickness as a thickness at initial cycling. Subsequently, keeping the lithium-ion battery for 19.5 hours, then discharging the lithium-ion battery at a constant current of 0.5 C until the voltage reaches 3.0 V, and recording a discharge energy at this time as an initial discharge energy (discharge energy = discharge capacity × discharge voltage platform), thereby completing one charge-and-discharge cycle. Repeating the foregoing steps to complete 23 charge-and-discharge cycles. Then charging the lithium-ion battery at a constant current of 0.5 C until the voltage reaches 4.45 V, charging the lithium-ion battery at a constant voltage of 4.45 V until the current reaches 0.05 C, keeping the lithium-ion battery for 19.5 hours, and then discharging the lithium-ion battery at a constant current of 0.5 C until the voltage reaches 3.0 V, thereby completing one charge-and-discharge cycle. Repeating the foregoing steps to complete 113 charge-and-discharge cycles. Recording a battery thickness after cycling (thickness of the battery fully charged at the last cycle, i.e., thickness of the battery charged at a constant voltage of 4.5 V until the current reaches 0.05 C) and a remaining discharge energy. Calculating an energy retention rate and a thickness growth rate of the lithium-ion battery according to the following formula: Energy retention rate = remaining discharge energy/initial discharge energy × 100%. Thickness growth rate = (battery thickness after cycling - battery thickness at initial cycle)/thickness at initial cycling × 100%.

### III. Test result

Table 1 shows the effects of the compound of Formula I and the compound of Formula II in the electrolyte solution and their contents on the intermittent cycle performance of a lithium-ion battery under a high temperature. In addition to the components listed in Table 1, the electrolyte solution also includes a certain amount of LiPF₆, so that the sum of the contents of all components in the electrolyte solution reaches 100%.

**Table 1**

| | Compound of Formula I | | Compound of Formula II | | a/b | a+b | Other components | | 136 intermittent cycles under 45°C | |
|---|---|---|---|---|---|---|---|---|---|---|
| | Compound | Mass percentage a (wt%) | Compound | Mass percentage b (wt%) | | | Compound | Mass percentage (wt%) | Energy retention rate (%) | Thickness growth rate (%) |
| Embodiment 1-1 | I-2 | 40 | II-1 | 8 | 5 | 48 | EC+PC | 19.5+20 | 63.10 | 15.5 |
| Embodiment 1-2 | I-3 | 40 | II-1 | 8 | 5 | 48 | EC+PC | 19.5+20 | 64.70 | 14.2 |
| Embodiment 1-3 | I-6 | 40 | II-1 | 8 | 5 | 48 | EC+PC | 19.5+20 | 63.30 | 15.1 |
| Embodiment 1-4 | I-11 | 40 | II-1 | 8 | 5 | 48 | EC+PC | 19.5+20 | 62.40 | 14.8 |
| Embodiment 1-5 | I-3 | 10 | II-1 | 5 | 2 | 15 | EC+PC+DEC | 19.5+20+33 | 46.70 | 19.3 |
| Embodiment 1-6 | I-3 | 10 | II-1 | 10 | 1 | 20 | EC+PC+DEC | 17.5+20+30 | 45.10 | 18.8 |
| Embodiment 1-7 | I-3 | 10 | II-1 | 8 | 1.25 | 18 | EC+PC+DEC | 19.5+20+30 | 51.20 | 17.3 |
| Embodiment 1-8 | I-3 | 22 | II-1 | 8 | 2.75 | 30 | EC+PC+DEC | 19.5+20+18 | 53.30 | 16.1 |
| Embodiment 1-9 | I-3 | 30 | II-1 | 8 | 3.75 | 38 | EC+PC+DEC | 19.5+20+10 | 60.10 | 15.2 |
| Embodiment 1-10 | I-3 | 45 | II-1 | 8 | 5.63 | 53 | EC+PC | 19.5+15 | 65.20 | 13.9 |
| Embodiment 1-11 | I-3 | 63 | II-1 | 8 | 7.88 | 71 | PC | 16.5 | 65.90 | 13.7 |
| Embodiment 1-12 | I-3 | 73 | II-1 | 8 | 9.13 | 81 | PC | 6.5 | 64.40 | 13.4 |
| Embodiment 1-13 | I-6+ I-3 | 50+30 | II-1 | 7.5 | 10.67 | 87.5 | / | / | 53.60 | 15.6 |
| Embodiment 1-14 | I-3 | 63 | II-1 | 5 | 12.6 | 68 | PC | 19.5 | 64.20 | 14.5 |
| Embodiment 1-15 | I-6+I-3 | 50+30 | II-1 | 5 | 16 | 85 | PC | 2.5 | 52.1 | 16.3 |
| Embodiment 1-16 | I-6+I-3 | 50+35 | II-1 | 5 | 17 | 90 | / | / | 47.10 | 18.6 |
| Embodiment 1-17 | I-3 | 63 | II-1 | 10 | 6.3 | 73 | PC | 14.5 | 66.70 | 13.9 |
| Embodiment 1-18 | I-3 | 63 | II-1 | 15 | 4.2 | 78 | PC | 9.5 | 62.40 | 13.6 |
| Embodiment 1-19 | I-3 | 62.5 | II-1+II-6 | 10+15 | 2.5 | 87.5 | / | / | 55.20 | 16.3 |
| Embodiment 1-20 | I-3 | 63 | II-2 | 10 | 6.3 | 73 | PC | 14.5 | 66.10 | 13.9 |
| Embodiment 1-21 | I-3 | 63 | II-3 | 10 | 6.3 | 73 | PC | 14.5 | 66.90 | 13.8 |
| Embodiment 1-22 | I-3 | 63 | II-6 | 10 | 6.3 | 73 | PC | 14.5 | 66.00 | 14 |
| Comparative Embodiment 1 | / | / | II-1 | 5 | / | / | EC+PC+DEC | 15+15+52.5 | 38.20 | 25.7 |
| Comparative Embodiment 2 | I-20 | 87.5 | / | / | / | / | / | / | 31.20 | 23.5 |

| | | | | | | | | | | |
|---|---|---|---|---|---|---|---|---|---|---|
| "/" means the item is not added or does not exist. | | | | | | | | | | |

Results show that when the electrolyte solution includes the compound of Formula I and the compound of Formula II, the energy retention rate of the lithium-ion battery under a high temperature can be significantly improved while the thickness growth rate is reduced, thereby significantly improving the intermittent cycle performance of the lithium-ion battery under a high temperature.

When the content of the compound of Formula I in the electrolyte solution is 10% to 80%, especially 45% to 73%, the intermittent cycle performance of the lithium-ion battery under a high temperature can be further improved.

When the content a of the compound of Formula I and the content b of the compound of Formula II in the electrolyte solution satisfies the condition that a/b is 1.25 to 16 and/or a+b is 18% to 87.5% (especially 48% to 81%), the intermittent cycle performance of the lithium-ion battery under a high temperature can be further improved.

Table 2 shows the effect of adding a first lithium salt to the electrolyte solution on the intermittent cycle performance of the lithium-ion battery under a high temperature.

**Table 2**

| Embodiments | Compound of Formula I | | Compound of Formula II | | First lithium salt | | a/c | Other components | | 136 intermittent cycles under 45°C | |
|---|---|---|---|---|---|---|---|---|---|---|---|
| | Compound | Mass percentage a (wt%) | Compound | Mass percentage b (wt%) | Compound | Mass percentage c (wt%) | | Compound | Mass percentage (wt%) | Energy retention rate (%) | Thickness growth rate (%) |
| 1-11 | I-3 | 63 | II-1 | 8 | LiPF₆ | 12.5 | 5.04 | PC | 16.5 | 65.90 | 13.7 |
| 2-1 | I-3 | 63 | II-1 | 8 | LiPF₆ | 10 | 6.3 | PC | 19 | 64.50 | 14.3 |
| 2-2 | I-3 | 63 | II-1 | 8 | LiPF₆ | 18 | 3.5 | PC | 11 | 63.40 | 14.6 |
| 2-3 | I-3 | 63 | II-1 | 8 | LiPF₆ | 25 | 2.52 | PC | 4 | 61.20 | 14 |
| 2-4 | I-3 | 63 | II-1 | 8 | LiPF₆+LiFSI | 10+2.5 | 5.04 | PC | 16.5 | 66.40 | 13.9 |
| 2-5 | I-3 | 63 | II-1 | 8 | LiPF₆+LiFSI | 12.5+5 | 4.06 | PC | 11.5 | 65.80 | 13.2 |
| 1-5 | I-3 | 10 | II-1 | 8 | LiPF₆ | 12.5 | 0.8 | EC+PC+DEC | 19.5+20+30 | 51.20 | 17.3 |
| 2-6 | I-6+I-3 | 50+30 | II-1 | 7.5 | LiPF₆ | 10 | 8 | / | / | 53.40 | 16.7 |
| 2-7 | I-3 | 10 | II-1 | 8 | LiPF₆ | 15 | 0.67 | EC+PC+DEC | 17+20+30 | 48.30 | 19.1 |
| 2-8 | I-6+I-3 | 50+35 | II-1 | 5 | LiPF₆ | 10 | 8.5 | / | / | 47.10 | 18.6 |

| | | | | | | | | | | | |
|---|---|---|---|---|---|---|---|---|---|---|---|
| "/" means the item is not added or does not exist. | | | | | | | | | | | |

Results show that when the electrolyte solution further includes a first lithium salt (LiPF₆ and/or LiFSI), and a ratio of the content of the Compound of Formula I to the content of the first lithium salt ranges from 0.8 to 8, the intermittent cycle performance of the lithium-ion battery under a high temperature can be further improved.

Table 3 shows the effect of the particle size of a positive active material on the intermittent cycle performance of a lithium-ion battery under a high temperature. Except for the parameters listed in Table 3, the settings in Embodiments 3-1 to 3-9 are the same as those in Embodiments 1-10.

**Table 3**

| Embodiments | Compound of Formula I | | Compound of Formula II | | Second lithium salt | | Ratio of the mass percentage of Compound of Formula II to the mass percentage of lithium difluorophosphate | Other components | | 136 intermittent cycles under 45°C | |
|---|---|---|---|---|---|---|---|---|---|---|---|
| | Compound | Mass percentage a (wt%) | Compound | Mass percentage b (wt%) | Compound | Mass percentag e (wt%) | | Compound | Mass percentage (wt%) | Energy retention rate (%) | Thickness growth rate (%) |
| 1-10 | I-3 | 45 | II-1 | 8 | / | / | / | EC+PC | 19.5+15 | 65.20 | 13.9 |
| 3-1 | I-3 | 45 | II-1 | 8 | LiBOB | 0.5 | / | EC+PC | 19+15 | 67.00 | 13.1 |
| 3-2 | I-3 | 45 | II-1 | 8 | LiTFSI | 5 | / | EC+PC | 14.5+15 | 67.20 | 13.5 |
| 3-3 | I-3 | 45 | II-1 | 8 | LiBF₄ | 2 | / | EC+PC | 17.5+15 | 67.50 | 13.5 |
| 3-4 | I-3 | 45 | II-1 | 15 | LiPO₂F₂ | 0.2 | 75 | EC+PC | 12.3+15 | 65.60 | 13.5 |
| 3-5 | I-3 | 45 | II-1 | 8 | LiPO₂F₂ | 0.2 | 40 | EC+PC | 19.3+15 | 67.30 | 13.8 |
| 3-6 | I-3 | 45 | II-1 | 8 | LiPO₂F₂ | 0.48 | 16 | EC+PC | 19+15.02 | 67.70 | 13.1 |
| 3-7 | I-3 | 45 | II-1 | 8 | LiPO₂F₂ | 0.96 | 8 | EC+PC | 18.5+15.04 | 67.90 | 13.2 |
| 3-8 | I-3 | 45 | II-1 | 5 | LiPO₂F₂ | 0.96 | 5 | EC+PC | 21.5+15.04 | 65.60 | 13.7 |
| 3-9 | I-3 | 45 | II-1 | 18 | LiPO₂F₂ | 0.2 | 90 | EC+PC | 9.3+15 | 64.90 | 14.4 |
| 3-10 | I-3 | 45 | II-1 | 5 | LiPO₂F₂ | 1.2 | 4.2 | EC+PC | 21.3+15 | 64.70 | 14.7 |
| 3-11 | I-3 | 45 | II-1 | 8 | LiPO₂F₂+ LiBF₄+ LiTFSI | 1+ 4+ 5 | 8 | EC+PC | 9.5+15 | 67.30 | 13.4 |

| | | | | | | | | | | | |
|---|---|---|---|---|---|---|---|---|---|---|---|
| "/" means the item is not added or does not exist. | | | | | | | | | | | |

Results show that when the electrolyte solution further includes a second lithium salt (at least one of LiTFSI, LiBF₄, LiDFOB, LiBOB, or LiPO₂F₂), the intermittent cycle performance of the lithium-ion battery under a high temperature can be further improved. When the electrolyte solution includes lithium difluorophosphate and a ratio of the content of the Compound of Formula II to the content of lithium difluorophosphate in the electrolyte solution ranges from 5 to 75, especially ranges from 8 to 40, the intermittent cycle performance of the lithium-ion battery under a high temperature can be further improved.

Table 4 shows the effect of the particle size of a positive active material on the intermittent cycle performance of a lithium-ion battery under a high temperature. Except for the parameters listed in Table 4, the settings in Embodiments 4-1 to 4-4 are the same as those in Embodiments 1-17, and the settings in Embodiments 4-5 to 4-8 are the same as those in Embodiments 3-5.

**Table 4**

| Embodiments | Dv₁₀ (nm) | Dv₅₀ (nm) | 136 intermittent cycles under 45°C | |
|---|---|---|---|---|
| | | | Energy retention rate (%) | Thickness growth rate (%) |
| 1-17 | 2 | 10 | 66.70 | 13.9 |
| 3-5 | 3.2 | 12 | 67.30 | 13.8 |
| 4-1 | 4 | 18 | 67.20 | 13.2 |
| 4-2 | 4 | 25 | 67.90 | 13.1 |
| 4-3 | 10 | 18 | 66.10 | 13.7 |
| 4-4 | 12 | 26 | 62.10 | 14.5 |
| 4-5 | 10 | 18 | 67.70 | 13.5 |
| 4-6 | 4 | 25 | 68.10 | 12.9 |
| 4-7 | 5.8 | 14.1 | 68.40 | 12.7 |
| 4-8 | 3.8 | 16.5 | 68.30 | 12.8 |

The results show that when the particle size of the positive active material satisfies the condition that Dv₅₀ is 10 µm to 25 µm and Dv₁₀ is 2 µm to 10 µm, especially when Dv₅₀ is 14.1 µm to 16.5 µm and Dv₁₀ is 3.8 µm to 5.8 µm, the intermittent cycle performance of the lithium-ion battery under a high temperature can be further improved.

Throughout the description, references to "embodiments", "part of embodiments", "one embodiment", "another example", "an example", "a specific example", or "a partial example" are meant to imply that at least one of the embodiments or examples in this application includes a particular feature, structure, material, or characteristic described in that embodiment or example. Thus, the descriptions that appear at various points throughout the description, for example: "in some embodiments", "in embodiments", "in an embodiment", "in another example", "in an example", "in a particular example", or "an example" are not necessarily references to the same embodiments or examples in this application. In addition, the particular features, structures, materials, or characteristics herein may be combined in one or more embodiments or examples in any suitable manner.

Although the illustrative embodiments have been demonstrated and described, a person skilled in the art should understand that the above embodiments are not to be construed as a limitation of this application, and embodiments may be altered, substituted, and modified without departing from the spirit, principles, and scope of this application.

## Claims

1. An electrochemical apparatus, comprising a positive electrode, a negative electrode, a separator, and an electrolyte solution; **characterized in that**, the electrolyte solution comprises a compound of Formula I and a compound of Formula II; wherein the compound of Formula I is 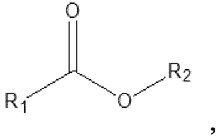
wherein R₁ is C₁ to C₁₀ alkyl, and R₂ is halogenated C₁ to C₁₀ alkyl; and the compound of Formula II is 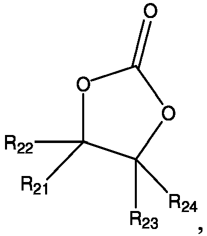
wherein R₂₁, R₂₂, R₂₃ and R₂₄ are each independently fluorine, or unsubstituted or halogenated C₁ to C₃ alkyl, and at least one of R₂₁, R₂₂, R₂₃ and R₂₄ comprises fluorine.

2. The electrochemical apparatus according to claim 1, **characterized in that**, the compound of Formula I is at least one selected from the following compounds:

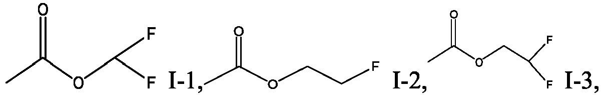

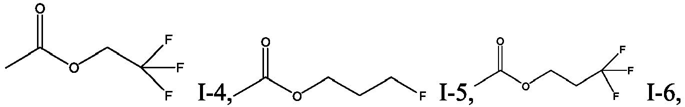

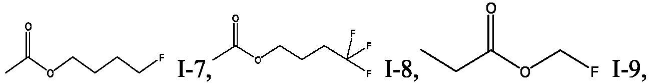

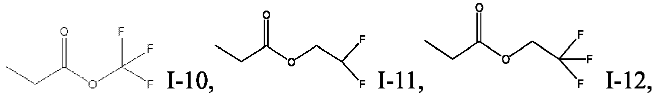

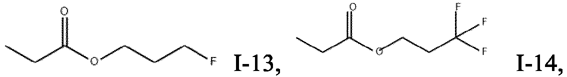

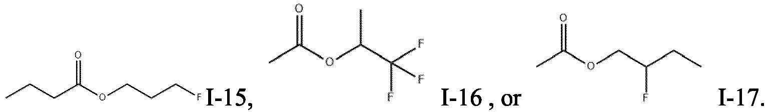

3. The electrochemical apparatus according to claim 1 or 2, **characterized in that**, based on a mass of the electrolyte solution, a mass percentage of the compound of Formula I is 10% to 80%.

4. The electrochemical apparatus according to any one of claims 1 to 3, **characterized in that**, the compound of Formula II is at least one selected from the following compounds:

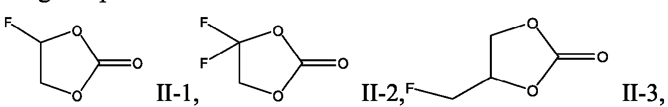

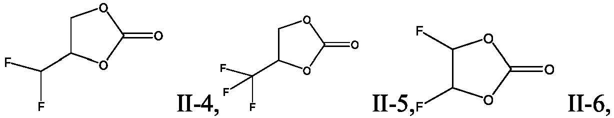

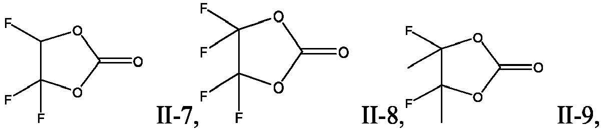

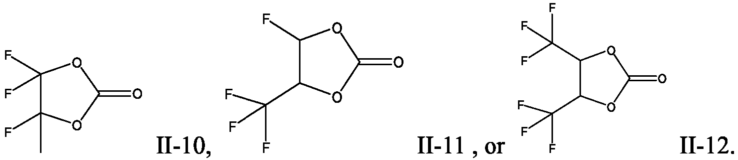

5. The electrochemical apparatus according to any one of claims 1 to 4, **characterized in that**, based on a mass of the electrolyte solution, a mass percentage of the compound of Formula II is 5% to 25%.

6. The electrochemical apparatus according to any one of claims 1 to 5, **characterized in that**, based on a mass of the electrolyte solution, a ratio of a mass percentage of the compound of Formula I to a mass percentage of the compound of Formula II ranges from 1.25 to 16.

7. The electrochemical apparatus according to any one of claims 1 to 6, **characterized in that**, based on a mass of the electrolyte solution, a sum of a mass percentage of the compound of Formula I and a mass percentage of the compound of Formula II ranges from 18% to 87.5%.

8. The electrochemical apparatus according to any one of claims 1 to 7, **characterized in that**, the electrolyte solution further comprises a first lithium salt; wherein the first lithium salt comprises at least one selected from the group consisting of lithium hexafluorophosphate and lithium bis(fluorosulfonyl)imide.

9. The electrochemical apparatus according to claim 8, **characterized in that**, based on a mass of the electrolyte solution, a ratio of a mass percentage of the compound of Formula I to a mass percentage of the first lithium salt ranges from 0.8 to 8.

10. The electrochemical apparatus according to any one of claims 1 to 9, **characterized in that**, the electrolyte solution further comprises a second lithium salt; wherein the second lithium salt comprises at least one selected from the group consisting of lithium bistrifluoromethanesulfonimide, lithium tetrafluoroborate, lithium difluoro(oxalato) borate, lithium bis(oxalato)borate and lithium difluorophosphate; and
based on a mass of the electrolyte solution, a mass percentage of the second lithium salt is 0.2% to 10%.

11. The electrochemical apparatus according to any one of claims 1 to 10, **characterized in that**, the electrolyte solution further comprises lithium difluorophosphate; and based on a mass of the electrolyte solution, a mass percentage of the lithium difluorophosphate is 0.01% to 0.96%.

12. The electrochemical apparatus according to any one of claims 1 to 10, **characterized in that**, the electrolyte solution further comprises lithium difluorophosphate; and based on a mass of the electrolyte solution, a ratio of a mass percentage of the compound of Formula II to a mass percentage of the lithium difluorophosphate ranges from 5 to 75.

13. The electrochemical apparatus according to any one of claims 1 to 12, **characterized in that**, the electrolyte solution satisfies at least one of the following conditions:
(1) the electrolyte solution comprises ethylene carbonate, propylene carbonate and lithium hexafluorophosphate;
(2) the electrolyte solution comprises ethylene carbonate, propylene carbonate, diethyl carbonate and lithium hexafluorophosphate;
(3) the electrolyte solution comprises ethylene carbonate, propylene carbonate, diethyl carbonate, lithium hexafluorophosphate and lithium difluorophosphate; or
(4) the electrolyte solution comprises ethylene carbonate, propylene carbonate, lithium hexafluorophosphate, and any two selected from the group consisting of lithium bistrifluoromethanesulfonimide, lithium tetrafluoroborate, lithium difluoro(oxalato) borate, lithium bis(oxalato)borate and lithium difluorophosphate.

14. The electrochemical apparatus according to any one of claims 1 to 13, **characterized in that**, the positive electrode comprises a positive active material; wherein the positive active material comprises lithium cobalt oxide, and a particle size of the positive active material satisfies the following condition: Dv₅₀ is 10 µm to 25 µm, Dv₁₀ is 2 µm to 10 µm.

15. An electronic apparatus, comprising the electrochemical apparatus according to any one of claims 1 to 14.
